# NEW EUROPEAN PATENT SPECIFICATION

(11) **EP 1 945 512 B2**
(45) Date of publication and mention of the opposition decision: **27.02.2019**
(45) Mention of the grant of the patent: 29.06.2016
(21) Application number: 06808477.1
(22) Date of filing: 08.11.2006
(51) Int. Cl.: B65B 25/22, B65B 25/06, B32B 27/36

(54) **POLYMERIC FILM PACKAGING**
POLYMERFOLIENVERPACKUNG
EMBALLAGE SOUS FILM POLYMERE

(30) Priority: 08.11.2005 GB 0522766
(43) Date of publication of application: 23.07.2008
(60) Divisional application: 12176568.9
(73) Proprietor: DuPont Teijin Films U.S. Limited Partnership, Chester, VA 23836 (US)
(72) Inventor: VOISIN, David, Midlothian, VA 23114 (US); BARBER, Jay, B., Richmond, VA 23225 (US); FRANZYSHEN, Stephen, K., Richmond, VA 23236 (US); DAWES, Mark, E., North Yorshire DL6 2BD (GB)
(74) Representative: Cockerton, Bruce Roger
(86) International application number: PCT/GB2006/004183
(87) International publication number: WO 2007/054698

(56) References cited:
- WO-A-00/23520
- WO-A-94/25527
- WO-A-2005/002990
- JP-A- 2000 355 091
- US-A- 5 688 456
- US-A- 5 837 358
- US-A- 6 077 904
- US-A1- 2004 052 993
- US-A1- 2004 067 284
- US-A1- 2005 100 729

## Description

The present invention is broadly concerned with the packaging and/or cooking of ovenable food products, particularly meat and fish, and is particularly concerned with a novel thermoformable packaging design for both fresh and frozen food products, particularly meat and fish, and particularly wherein the packaging is dual-ovenable.

Polymeric film has long been used to package ovenable food products, and there are many examples of packaging films and bags made therefrom within which a food product is precooked and shipped to the wholesaler, retailer or consumer. The packaging may comprise a tray within which is disposed the food product and a polymeric lidding film heat-sealed to the tray, or may comprise a polymeric film bag which forms the whole of the packaging around the food product. These types of foods may be consumed with or without warming. If warming is required, it may be effected in a conventional or microwave oven, and the consumer may or may not need to remove the packaging prior to warming. In addition, it is known to package raw meats in shrinkable polymeric film bags which are shrink-wrapped around the meat. The consumer cooks the meat whilst it remains in the packaging. Such packaging is generally referred to as a "cook-in" film or bag and is becoming increasingly popular since it reduces the amount of time spent preparing meals and requires little cooking skill from the consumer. Packaging of the type described above has been disclosed in, *inter alia,* US-4820536, US-5552169, US-6623821, US-2003/0021870-A1, WO-2003/061957-A1, WO-02/26493-A1 and WO-03/026892-A1.

The "cook-in" concept is particularly desirable since it avoids the need for the consumer to handle raw meat or fish, which some consumers find disagreeable. Moreover, the handling of raw meat or fish is a growing concern from a food-safety perspective, and a pre-packaged cook-in food product reduces the risk of contamination. Convenience for the consumer can also be increased since cooking instructions can be provided in association with the packaging product. In addition, the pre-packaging of food products can be used as a mechanism of portion control, which is becoming desirable in an increasingly health-conscious market-place.

Nevertheless, despite the convenience of the wide range of food packaging currently available on the market, including cook-in packaging, the critical requirements of the consumer remain taste and texture. Thus, while the consumer desires increased convenience, the characteristics of taste, texture and appearance of the cooked cook-in product are desired to resemble those of the food product had it reached the table via more traditional cooking means. With the growth of a more accessible and sophisticated restaurant sector, consumers are also becoming aware of a wider variety of tastes and, consequently, besides the quality of the taste and texture of the meat or fish itself, it would be desirable to provide consumers with seasoned or marinated pre-packaged cook-in food products. In addition, the consumer is becoming increasingly health conscious, and becoming more inclined towards natural produce.

It is also of course a requirement that the packaged food product can be properly and safely cooked, and the packaging must allow the food contents of the packaging to achieve a sufficiently high core temperature in order to kill pathogens and bacteria.

There remains a need to balance one or more of these requirements with the convenience of cook-in packaging, and particularly to improve properties such as the taste and texture characteristics relative to existing cook-in packaging. It would also be desirable to improve consumer-convenience by reducing the duration of the cook cycle, while retaining taste and texture of the cooked product. It would also be desirable to improve consumer-convenience by providing a cook-in packaged product which can be transferred directly from the freezer or refrigerator to the oven. The packaged food product should be dual-ovenable.

It is an object of this invention to address one or more of the afore-mentioned problems.

According to the present invention there is provided a method of packaging ovenable fish or meat according to claim 1.

The meat or fish are packaged in preparation for cooking in an oven, and said packaging comprising the receiving and covering films is adapted to surround the meat or fish during the cooking cycle. The receiving film and the covering film should be capable of withstanding exposure to cooking conditions in the oven, and preferably in both a conventional and microwave oven, i.e. the polymeric material of the receiving and covering films is "dual-ovenable".

According to a further aspect of the invention, there is provided a method of cooking fish or meat according to claim 2.

Step (ii) of the methods described herein is the step of forming a raised outer or peripheral portion and an indented central portion in the receiving film, such that the receiving film substantially assumes the general shape of a tray wherein the raised outer or peripheral portion forms the walls of the tray and the indented central portion forms the base of the tray. Step (ii) is effected using the technique of thermoforming, preferably vacuum thermoforming, according to conventional techniques and using commercially available equipment. Thus, reference herein to "thermoforming" is a reference to a process which comprises the steps of heating the substrate to a temperature (T₁) wherein T₁ is above the glass transition temperature (T_{g}) of the material, and if the material exhibits a crystalline melting temperature (Tₘ) wherein T₁ is below the crystalline melting temperature, and then subjecting the material to deformation, i.e. deforming the material while it is in its softened, rubbery, solid state.

The portion of meat or fish disposed on the first surface of the receiving film is disposed in the indented central portion thereof.

The receiving film and the covering film are preferably different in composition from each other and should be approved for use in food applications by the relevant authorities. Any suitable polymeric material may be used for the covering film. In one embodiment, both the receiving film and the covering film comprise polyester material.

The heat-seal functionality between the receiving and covering films may be provided by modulating the properties, and specifically the composition, of the first surfaces of the receiving film and/or the covering film. As described below, the receiving film and/or covering film may comprise a heat-sealable layer disposed on a support, the heat-sealable layer comprising the first surface of the film. Preferably, at least the first surface of the covering film is a heat-sealable surface, and preferably it is the first surface of the covering film which substantially provides the heat-seal functionality required to adhere the first surfaces of the covering and receiving films. In one embodiment, both the covering and the receiving films comprise a heat-sealable first surface, and in this embodiment, the first surfaces of each of the receiving and covering films comprise the same heat-sealable component. The polymeric material of the heat-sealable surface should soften to a sufficient extent that its viscosity becomes low enough to allow adequate wetting for it to adhere to the surface to which it is being bonded. Typically, the heat-seal functionality of a polyester layer having a melting temperature (Tm) is manifested at a temperature below Tm, and in that case it would not be necessary to exceed Tm when forming a heat-seal bond. On the other hand, heat-sealing of a polyamide surface is more typically achieved only above the melting temperature (Tm) of the polyamide.

### Receiving Film

The receiving film is a dual-ovenable thermoformable polymeric receiving film having a first and second surface, wherein said receiving film consists of a mono-layer substrate, an optional barrier layer, and an optional heat-sealable layer which where present constitutes the first surface of the receiving film. Where present, the heat-sealable layer is disposed on a first surface of the substrate and the optional barrier layer is disposed on the other surface (the second surface) of the substrate, to provide a receiving film having a heat-sealable first surface.

A wide range of films can be used for the receiving layer, the principal requirements being that the film comprises thermoplastic and thermoformable material. In other words, the film must:
(i) reversibly soften at temperatures above the glass transition temperature (T_{g}) thereof and, if the material exhibits a crystalline melting temperature (Tₘ), below the crystalline melting temperature, at which temperatures the material assumes a rubbery solid state such that it is deformable by an external force; and
(ii) once the film has been cooled below its glass transition point, retain the deformation which was introduced into the film while at a temperature above the glass transition point.

In addition, the elongation (strain) at break (ETB) should be greater than the strains experienced during the thermoforming operation, and the tensile strength at maximum elongation (UTS) should be greater than the yield stress.

Suitable thermoformable fims are commercially available and the skilled person would be well aware of their methods of manufacture and the characteristics thereof. Thermoformability is indicated by the stress-strain curve above the glass transition temperature of the material (see, for instance, "Thermoforming" by James L. Throne (Pub. Karl Henser Verlag, Munich 1987; ISBN 3-446-14699-7). A thermoformable polymeric film is characterised by a relatively low force required to stretch a film above its Tg and a relatively high extent of stretching, when compared with a standard polymeric film. Quantitative assessment of thermoformability via measurement of UTS and ETB, measured according to ASTM D882, has been found unsatisfactory since such measurements on thermoformable films have been found to be relatively inaccurate at temperatures above Tg. Breaking often occurs just above the grips when using a strip of film with a rectangular shape, leading to inaccurate data. Breaking occurs at lower elongation than expected when using a dog bone shape for the film sample as a result of notching when cutting the strip, also leading to inaccurate measurements. Assessment of thermoformability is more suitably achieved by measuring one or more of the Young's modulus, the yield stress and the post-yield modulus, particularly the yield stress and the post-yield modulus, of the film at temperatures above Tg, as described hereinbelow. Measurement of these parameters at various temperatures above Tg provides a general indication of the thermoformability of the film, but the stress-strain behaviour is essentially critical only at the temperature of the thermoforming process, which depends on such factors as the identity and thickness of the film, the degree of deformation (or "draw") required, the apparatus used and the magnitude and rate of the deformation strain applied. More fundamentally, of course, thermoformability requires that the deformed film retains the deformed shape, once cooled. Accordingly, the important characteristic of a thermoformable film is therefore the relaxation of induced stress at the processing temperature after stretching the film to the desired strain. The characteristic is usually expressed as a percentage of stress retained after a defined time period (in seconds), or as the time required to relax stress by a defined percentage, and in a thermoformable film the values of these parameters should be as low as possible, as is well known in the art (see for instance "Viscoelastic Properties of Polymers"; John D. Ferry, page 8 et seq., £rd Ed, Wiley, NY; ISBN 0-471-04894-1; and "Mechanical Properties of Solid Polymers", I. M. Ward, 2nd Ed., John Wiley)).

The crystallinity percentage (X) in a receiving film may also give an indication of the ability of a film to thermoform. In one embodiment, the receving film comprises a copolyester, having a crystallinity percentage (X) below about 50%, more preferably below about 45%, more preferably in the range from 5 to about 42%, more preferably in the range from 3 to about 40%.

The shrinkage of the receiving film, measured as described herein, is less than 3%, in the machine dimension and the transverse dimension. Methods of controlling shrinkage in the final film by varying process parameters during the stretching and heat-setting steps of film manufacture are well-known to the skilled person.

The total thickness of the receiving film is from 12 to 200 µm in thickness, which allows greater flexibility (i.e. lower rigidity). The film is a self-supporting film or sheet by which is meant a film or sheet which (i) is not a liquid or dispersion; (ii) is capable of independent existence in the absence of a supporting base.

The first surface of the receiving film may be a heat-sealable surface, and this may be provided by the properties of the polymeric material of the monolayer receiving film or it may be provided by an additional heat seal layer on the substrate of the receiving film. As noted above, the first surface of the receiving film is uppermost and is the layer which is contacted with the covering film.

The receiving film comprises a copolyester, preferably having a glass transition temperature (Tg) below about 110°C, more preferably below about 100°C, more preferably in the range from about 30 to about 100°C, more preferably in the range from about 40 to about 90 °C.

In **Embodiment R1,** the receiving film comprises, and preferably is, a copolyester layer derived from:
(i) one or more diol(s);
(ii) an aromatic dicarboxylic acid; and
(iii) one or more aliphatic dicarboxylic acid(s) of the general formula CₙH₂ₙ(COOH)₂ wherein n is 2 to 10, preferably 4 to 10,
wherein the aliphatic dicarboxylic acid is present in the copolyester in an amount of from about 1 to about 20 mol%, preferably from about 1 to 10 mol%, preferably from about 3 to about 10 mol%, based on the total amount of dicarboxylic acid components in the copolyester, wherein the copolyester is a random or alternating copolyester. The copolyester is obtainable by condensing said dicarboxylic acids or their lower alkyl (up to 6 carbon atoms) diesters with one or more diols. The aromatic dicarboxylic acid is preferably selected from terephathalic acid, isophathalic acid, phthalic acid, 2,5-, 2,6- or 2,7-naphthalenedicarboxylic acid, and is preferably terephthalic acid. The diol is preferably selected from aliphatic and cycloaliphatic glycols, e.g. ethylene glycol, 1,3-propanediol, 1,4-butanediol, neopentyl glycol and 1,4-cyclohexanedimethanol, preferably from aliphatic glycols. Preferably the copolyester contains only one glycol, preferably ethylene glycol. The aliphatic dicarboxylic acid is preferably saturated and preferably selected from succinic acid, glutaric acid, adipic acid, pimelic acid, suberic acid, azeleic acid or sebacic acid. In one embodiment the aliphatic dicarboxylic acid is selected from succinic acid, adipic acid, azeleic acid and sebacic acid. Preferably the copolyester contains only one aliphatic dicarboxylic acid. Preferably the aliphatic dicarboxylic acid is azeleic acid. Particularly preferred examples of copolyesters are (i) copolyesters of azeleic acid and terephthalic acid with ethylene glycol; (ii) copolyesters of adipic acid and terephthalic acid with ethylene glycol; and (iii) copolyesters of sebacic acid and terephthalic acid with an ethylene glycol. Particularly preferred copolyesters are those of azeleic acid and terephthalic acid with ethylene glycol. The copolyester is a random or alternating copolyester, as opposed to a block copolyester. Preferably, the copolyester is a random copolyester. Reference herein to a random copolyester means a copolyester wherein the different ester monomeric units, i.e. the [aromatic dicarboxylic acid - diol] units and the [aliphatic dicarboxylic acid - diol] units are situated randomly in the chain. Reference herein to an alternating copolyester means a copolyester wherein there is a definite ordered alternation of the monomeric ester units. Preference herein to a block copolyester means a copolyester wherein the chain consists of relatively long blocks of one type of monomeric ester unit joined together followed by relatively long blocks of a different type of monomeric ester unit joined together.

Formation of the copolyesters mentioned herein is conveniently effected in a known manner by condensation or ester interchange, generally at temperatures up to about 275°C.

Thermoformability of the receiving film can be further improved by incorporating a plasticizer. Suitable plasticizers include aromatic dicarboxylic acid esters such as dimethyl phthalate, diethyl phthalate, di-n-butyl phthalate, di-n-hexyl phthalate, di-n-heptyl phthalate, di-2-ethylhexyl phthalate, di-n-octyl phthalate, di-n-nonyl phthalate, diethyl isophthalate, di-n-butyl isophthalate, di-2-ethylhexyl isophthalate, diethyl terephthalate, din-butyl terephthalate, di-2-ethylhexyl terephthalate, etc.; phosphoric acid esters such as triethyl phosphate, tri-n-butyl phosphate, trioctyl phosphate, cresyl phosphate, etc.; sebacic acid esters such as dimethyl sebacate, diethyl sebacate, di-n-butyl sebacate, diamyl sebacate, etc.; adipic acid esters such as hexyl adipate, etc.; esters such as butyl phthalyl butyl glycolate, tributyl citrate, tetrahydrofurfuryl oleate, methyl acetyl ricinoleate, etc.; and polyethylene glycol, etc. In one embodiment, the plasticizer is selected from aromatic dicarboxylic acid esters (particularly phthalic acid esters) because they have excellent heat resistance, can significantly improve thermformability, and are free from problems of sublimation and bleedout during film-forming process. The melting point at atmospheric pressure of the plasticizer is preferably at least 300°C or higher, more preferably at least 350°C. The content of the plasticizer in the layer is preferably 0.01 to 5 wt%, more preferably 0.05 to 2 wt% based on the weight of the polymeric material of the layer.

Formation of the receiving film may be effected by conventional techniques well-known in the art. Conveniently, film formation is effected by extrusion, in accordance with the procedure described below. In general terms the process comprises the steps of extruding a layer of molten polymer, quenching the extrudate and orienting the quenched extrudate in at least one direction.

A polyester receiving film is biaxially-oriented. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties.

In a tubular process, simultaneous biaxial orientation may be effected by extruding a thermoplastic tube which is subsequently quenched, reheated and then expanded by internal gas pressure to induce transverse orientation, and withdrawn at a rate which will induce longitudinal orientation.

In the preferred flat film process, the film-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the copolyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is generally effected so that the dimension of the oriented film, particularly a polyester film, is from 2 to 5 times, generally at least 2.5 times, preferably no more than 4.5 times, more preferably no more than 3.5 times its original dimension in the or each direction of stretching. Stretching in the machine direction is effected at temperatures higher than the Tg of the polymeric material of the layer, typically less than 30°C above Tg, preferably less than 20°C above Tg and more preferably less than 15°C above Tg of the polymeric material of the layer. Stretching in the transverse direction is typically effected at temperatures in the range of 100 to 130°C after preheating in the range of 80 to 100°C, and in any case higher than the Tg of the polymeric material of the layer, typically less than 80°C above Tg, preferably less than 60°C above Tg and more preferably less than 50°C above Tg of the polymeric material of the layer. It is not necessary to stretch equally in the machine and transverse directions although this is preferred if balanced properties are desired.

A stretched film is dimensionally stabilised by heat-setting under dimensional restraint at a temperature above the glass transition temperature of the polyester but below the melting temperature thereof, to induce crystallisation of the polyester. In applications where film shrinkage is not of significant concern, the film may be heat set at relatively low temperatures or not at all. On the other hand, as the temperature at which the film is heat set is increased, the tear resistance of the film may change. Thus, the actual heat set temperature and time will vary depending on the composition of the film but should not be selected so as to substantially degrade the tear resistant properties of the film. Within these constraints, a heat-set temperature of about 100 to 250°C, preferably about 120 to 200°C, is generally desirable. Dimensional relaxation ("toe-in"), wherein the film is allowed to relax in a given dimension by up to about 5% and typically about 2-4% during the heat-setting step, may be used to modulate shrinkage of the film.

Suitable additional heat-seal layers, if present, for the receiving film include the heat-seal layers described hereinbelow in connection with the covering film, particularly Embodiments B1, B2, B3 and B4, and particularly Embodiment B3.

Formation of an additional heat-sealable layer may be effected by conventional techniques. The method of formation of the heat-sealable layer and application thereof to the substrate layer will depend on the identity of the heat-sealable layer. Conventional techniques include casting the heat-sealable layer onto a preformed substrate layer. Conveniently, formation of an additional heat-sealable layer and the substrate layer is effected by coextrusion. Other methods of forming the heat-sealable layer include coating the heat-sealable polymer onto the substrate layer, and this is a typical method for the preferred heat-sealable layer described above. Coating may be effected using any suitable coating technique, including gravure roll coating, reverse roll coating, dip coating, bead coating, extrusion-coating, melt-coating or electrostatic spray coating. Coating may be conducted "off-line", i.e. after any stretching and subsequent heat-setting employed during manufacture of the base layer, or "in-line", i.e. wherein the coating step takes place before, during or between any stretching operation(s) employed.

Prior to application of an additional heat-sealable layer onto a substrate, the exposed surface of a substrate may, if desired, be subjected to a chemical or physical surface-modifying treatment to improve the bond between that surface and the subsequently applied layer. For example, the exposed surface may be subjected to a high voltage electrical stress accompanied by corona discharge. Alternatively, the exposed surface may be pretreated with an agent known in the art to have a solvent or swelling action, such as a halogenated phenol dissolved in a common organic solvent e.g. a solution of p-chloro-m-cresol, 2,4-dichlorophenol, 2,4,5- or 2,4,6-trichlorophenol or 4-chlororesorcinol in acetone or methanol.

### Covering Film

The covering film has a first and a second surface. The second surface is the surface which is outermost when the film is contacted with the receiving film, and the first surface is the surface which is innermost and faces the receiving film and the goods to be packaged. The covering film, specifically its first surface, must be heat-sealable to the first surface of the receiving film.

In a first embodiment, hereinafter referred to as **Embodiment A,** the covering film is a mono-layer film. The mono-layer film may itself comprise a heat-sealable polymer, or alternatively the heat-sealable functionality may be provided by a heat-sealable surface of the receiving film and the mono-layer covering film need only be capable of forming a heat-seal bond to the heat-sealable surface of the receiving film.

In a second embodiment, which is the preferred embodiment and hereinafter referred to as **Embodiment B,** the covering film is a multilayer film and comprises a substrate and a heat-sealable layer such that the heat-sealable layer constitutes the first surface of the covering film.

The covering film is a self-supporting film or sheet by which is meant a film or sheet capable of independent existence in the absence of a supporting base. The covering film is preferably uniaxially or biaxially oriented, preferably biaxially oriented, and such orientation is applicable to both polyester and polyamide covering films.

The total thickness of the covering film is typically from about 12 to about 200 µm, preferably from about 12 to about 100 µm, more preferably from about 12 to about 75 µm, and typically is about 12 to 50 µm in thickness. Where the covering film comprises a substrate and a heat-sealable layer, the thickness of the heat-sealable layer is generally between about 10 and 50% of the thickness of the substrate. Typically, the heat-sealable layer may have a thickness of from about 2 to about 50 µm, more preferably from about 2 to about 40 µm, more preferably from about 2 to about 30 µm, more preferably from about 2 to about 25 µm, and more preferably from about 4 to about 25 µm.

The shrinkage of the covering film, measured as described herein, is preferably no more than 7%, more preferably no more than 5%, and most preferably no more than 3%, in the machine dimension and/or the transverse dimension. Methods of controlling shrinkage in the final film by varying process parameters during the stretching and heat-setting steps of film manufacture are well-known to the skilled person.

Preferably, a heat-sealable covering film exhibits a heat-seal strength (at ambient temperatures) to itself of at least 400 g/25mm, preferably from about 400 g/25mm to about 2500 g/25mm, and more preferably from about 500 to about 1500 g/25mm.

The covering film is suitably a thermoplastic film, and a wide range of films can be used for the covering layer. Preferably, the covering film comprises polyester and/or poylamide, preferably polyester or polyamide, and in one embodiment polyester.

In one embodiment, the covering film comprises a polyamide film. Suitable polyamide films include those derived from nylon 6,6 (the condensation product of adipic acid and hexamethylene diamine) or blends thereof, including cast and monoaxially oriented films, for instance Dartek 0-401 and UF-410 (DuPont).

In an alternative embodiment, the covering film comprises a polyester.

In a further alternative embodiment, the covering film comprises a layer of polyester material and a layer of polyamide material, optionally with a layer of suitable adhesive disposed therebetween, and in this embodiment, the polyester material suitably provides the heat-sealable functionality and the polyamide layer comprises the support.

The covering film will be described hereinafter primarily in terms of a polyester receiving film, although it will be appreciated that the disclosure is also applicable to polyamide films, the manufacture and composition of which are well-known in the art.

The covering film preferably comprises a linear polyester. Suitable polyesters for a monolayer covering film, or for the substrate layer of a multilayer covering film, include those derived from one or more dicarboxylic acids, such as terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro-terephthalic acid or 1,2-bis-p-carboxyphenoxyethane (optionally with a monocarboxylic acid, such as pivalic acid), and from one or more glycols, particularly an aliphatic or cycloaliphatic glycol, such as ethylene glycol, 1,3-propanediol, 1,4-butanediol, neopentyl glycol and 1,4-cyclohexanedimethanol. An aliphatic glycol is preferred. A preferred polyester is selected from polyethylene terephthalate and polyethylene naphthalate. Polyethylene terephthalate (PET) or a copolyester thereof is particularly preferred.

In Embodiment B, the heat-sealable layer is any layer capable of forming a heat-seal bond to the surfaces of the receiving film, for example a polymeric material such as a polyester, ethylene vinyl acetate (EVA) or a modified polyethylene. In one embodiment, the heat-sealing layer comprises a polyester, particularly a copolyester derived from one or more of the dicarboxylic acid(s) or their lower alkyl diesters with one or more of the glycol(s) referred to herein.

In one embodiment, hereinafter referred to as **Embodiment B1,** the heat-sealable layer comprises a copolyester derived from an aliphatic glycol and at least two dicarboxylic acids, particularly aromatic dicarboxylic acids, preferably terephthalic acid and isophthalic acid. A preferred copolyester is derived from ethylene glycol, terephthalic acid and isophthalic acid. The preferred molar ratios of the terephthalic acid component to the isophthalic acid component are in the range of from 50:50 to 90:10, preferably in the range from 65:35 to 85:15. In a preferred embodiment, this copolyester is a copolyester of ethylene glycol with about 82 mole % terephthalate and about 18 mole % isophthalate.

In an alternative embodiment, hereinafter referred to as **Embodiment B2,** the heat-sealable layer comprises a copolyester derived from an aliphatic diol and a cycloaliphatic diol with one or more, preferably one, dicarboxylic acid(s), preferably an aromatic dicarboxylic acid. Examples include copolyesters of terephthalic acid with an aliphatic diol and a cycloaliphatic diol, especially ethylene glycol and 1,4-cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65. In a preferred embodiment this copolyester is a copolyester of terephthalic acid with about 33 mole % 1,4-cyclohexane dimethanol and about 67 mole % ethylene glycol. An example of such a polymer is PETG™6763 (Eastman) which comprises a copolyester of terephthalic acid, about 33% 1,4-cyclohexane dimethanol and about 67% ethylene glycol and which is always amorphous. In an alternative embodiment, the polymer may comprise butane diol in place of ethylene glycol.

In a further alternative embodiment, hereinafter referred to as **Embodiment B3,** which is particularly preferred, the heat-seal layer comprises a copolyester, preferably a copolyester in which the acid components are selected from one or more (preferably one) aromatic dicarboxylic acid(s) and one or more (preferably one) aliphatic dicarboxylic acid(s) (preferably a saturated aliphatic dicarboxylic acid of the general formula CₙH₂ₙ(COOH)₂ wherein n is 2 to 8). A preferred aromatic dicarboxylic acid is terephthalic acid. Preferred aliphatic dicarboxylic acids are selected from sebacic acid, adipic acid and azelaic acid. The concentration of the aromatic dicarboxylic acid present in the copolyester is preferably in the range from 45 to 80, more preferably in the range 45 to 75, more preferably 50 to 70, and particularly 55 to 65 mole % based on the dicarboxylic acid components of the copolyester. The concentration of the aliphatic dicarboxylic acid present in the copolyester is preferably in the range from 20 to 55, preferably in the range of 25 to 55, more preferably 30 to 50, and particularly 35 to 45 mole % based on the dicarboxylic acid components of the copolyester. Particularly preferred examples of such copolyesters are (i) copolyesters of azeleic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Preferred polymers include a copolyester of sebacic acid/terephthalic acid/butylene glycol (preferably having the components in the relative molar ratios of 45-55/55-45/100, more preferably 50/50/100) having a glass transition point (T_{g}) of -40°C and a melting point (Tₘ) of 117°C), and a copolyester of azeleic acid/terephthalic acid/ethylene glycol (preferably having the components in the relative molar ratios of 40-50/60-50/100, more preferably 45/55/100) having a T_{g} of -15°C and a Tₘ of 150°C.

In a further alternative embodiment, hereinafter referred to as **Embodiment B4,** the heat-sealable layer comprises an ethylene vinyl acetate (EVA). Suitable EVA polymers may be obtained from DuPont as Elvax™ resins. Typically, these resins have a vinyl acetate content in the range of 9% to 40%, and typically 15% to 30%.

The covering film may be manufactured according to the general techniques described herein above for the receiving film. The formation of the heat-sealable layer on the substrate is typically effected by coextrusion, which would be particularly suitable for Embodiments B1 and B2 above, or by coating the heat-sealable polymer onto the substrate, which would be particularly suitable for Embodiments B3 and B4 above.

The receiving and covering films of the present invention do not exhibit an anhydride functionality on the first surfaces thereof and preferably on any surface. As used herein, the phrase "anhydride functionality" refers to any form of anhydride functionality such as the anhydride of maleic acid, fumaric acid, etc. whether blended with one or more polymers, grafted onto a polymer or copolymerised with a polymer, and, in general, is also inclusive of derivatives of such functionalities, such as acids, esters and metal salts derived therefrom.

One or more of the layers of the receiving and/or covering film(s) may conveniently contain any of the additives conventionally employed in the manufacture of polymeric films. Thus, agents such as cross-linking agents, dyes, pigments, voiding agents, lubricants, anti-oxidants, radical scavengers, UV absorbers, thermal stabilisers, antiblocking agents, surface active agents, slip aids, optical brighteners, gloss improvers, prodegradents, viscosity modifiers and dispersion stabilisers may be incorporated as appropriate. In particular the composite film may comprise a particulate filler which may, for example, be a particulate inorganic filler or an incompatible resin filler or a mixture of two or more such fillers. Such fillers are well-known in the art.

Particulate inorganic fillers include conventional inorganic fillers, and particularly metal or metalloid oxides, such as alumina, silica (especially precipitated or diatomaceous silica and silica gels) and titania, calcined china clay and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the polymer layer. Preferred particulate inorganic fillers include titanium dioxide and silica.

The inorganic filler should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 µm, more preferably 0.05 to 1.5 µm, and particularly 0.15 to 1.2 µm. Preferably at least 90%, more preferably at least 95% by volume of the inorganic filler particles are within the range of the volume distributed median particle diameter ± 0.8 µm, and particularly ±0.5 µm. Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

The components of the composition of a layer may be mixed together in a conventional manner. For example, by mixing with the monomeric reactants from which the layer polymer is derived, or the components may be mixed with the polymer by tumble or dry blending or by compounding in an extruder, followed by cooling and, usually, comminution into granules or chips. Masterbatching technology may also be employed.

In the preferred embodiment, the covering film and optionally also the receiving film is optically clear, preferably having a % of scattered visible light (haze) of <10%, preferably <6%, more preferably <3.5 % and particularly <2%, measured according to the standard ASTM D 1003. Preferably, the total light transmission (TLT) in the range of 400-800 nm is at least 75%, preferably at least 80%, and more preferably at least 85%, measured according to the standard ASTM D 1003. In this embodiment, filler is typically present in only small amounts, generally not exceeding 0.5% and preferably less than 0.2% by weight of the polymer of the layer.

In one embodiment, the covering and receiving films comprise an additional barrier layer on the second surfaces thereof, in order to improve the shelf-life of the packaged products.

Where a barrier layer is included it is a coating rather than a laminated layer. Preferably, the barrier layer provides a barrier to water vapour and/or oxygen, such that the water vapour transmission rate is in the range of 0.01 to 50g/m²/day (preferably 0.01 to 10g/ m²/day, more preferably 0.1 to 10g/m²/day), and/or the oxygen transmission rate is in the range of 0.01 to 150 cm³/m²/day/atm (preferably 0.01 to 15 cm³/m²/day/atm, more preferably 0.1 to 10 cm³/ m²/day/atm). Conventional barrier layers include PVDC, PCTFE, polyamide, EVOH and PVOH. PVDC layers are particularly suitable for providing a barrier to both gas and water vapour; EVOH and PVOH layers are particularly suitable for providing a barrier to gas; while PCTFE layers are particularly suitable for providing a barrier to water vapour. Suitable layers are known in the art and are disclosed, for instance, in US-5328724 (EVOH), US-5151331 (PVDC), US-3959526 (PVDC), US-6004660 (PVDC and PVOH). Suitable PVDC polymeric layers are copolymers of 65 to 96% by weight of vinylidene chloride and 4 to 35% of one or more comonomers such as vinyl chloride, acrylonitrile, methacrylonitrile, methyl methacrylate, or methyl acrylate, and are generally referred to as saran. A suitable grade contains about 7 weight percent methacrylonitrile, 3 weight percent methyl methacrylate, and 0.3 weight percent itaconic acid comonomers. PVDC is a preferred barrier layer.

It may be required in some applications to improve the mechanical properties of the packaging, for instance to increase its puncture resistance or to improve its strength so that it is more resistant to the stresses experienced during storage, transportation and distribution. For example, if a bone is present in the packaged food product, the packaging may be required to exhibit improved puncture resistance. If the packaged food product is very heavy (a whole chicken for example), the strength of the packaging may need to be increased.

In one embodiment, improved mechanical properties of the packaging may be achieved by adhesive lamination of the aforementioned structures for the covering films with a polymeric film showing high tensile strength. For instance, covering films comprising polyester may be adhesively laminated with a polymeric film such as nylon.

Alternatively, the mechanical properties of the covering and/or receiving films may be optimised by, for instance, increasing the ultimate tensile strength and elongation at break (as measured at room temperature according to ASTM D882). Ultimate tensile strength may be increased by increasing the intrinsic viscosity (IV) of the film. A typical range for the IV of an unfilled polyethylene terephthalate film is in the range 0.58 to 0.62 dl.g⁻¹, and increasing the IV up to about 0.75, more typically up to about 0.68 dl.g⁻¹ has been found to provide films which exhibit a higher tensile strength. Alternatively, or additionally, the thickness of the film may be increased to improve puncture resistance, typically towards the upper ranges of the thicknesses recited hereinabove, particularly from around 100 µm to 200µm or above. Increases in elongation at break may be obtained by blends with elastomeric polymers. For instance, a polyester receiving and/or covering layer may be blended with relatively minor amounts (less than 50%, typically less than 25%, typically less than 10% by weight of the film layer) of elastomeric copolyesters such as Hytrel and Arnitel.

In one embodiment, the receiving and/or covering films may display printed material on the outer (second) surfaces thereof. For instance, a covering film may have on one surface thereof a printable or ink-receiving layer, and optionally a primer layer (such as that disclosed in EP-0680409, EP-0429179, EP-0408197, EP-0576179 or WO-97/37849, the disclosures of which are incorporated herein by reference) between the covering film and the printable or ink-receiving layer in order to increase adhesion. Suitable printable or ink-receiving layers are disclosed in, for instance, EP-0696516, US-5888635, US-5663030, EP-0289162, EP-0349141, EP-0111819 and EP-0680409, the disclosures of which are incorporated herein by reference.

### Packaging Process

The packaging process involves a thermoforming step. Thermoforming and other similar techniques are well known in the art for packaging food products. A description of typical thermoforming techniques appears in Modern Plastics Encyclopedia, 1984-1985, at pages 329-336. There are many different forms of thermoforming a plastic sheet including drape forming, vacuum forming, plug-assist forming, plug-assist vacuum forming, deep-draw, matched mold, snapback and twin sheet. For instance, drape forming comprises heating a plastic sheet and stretching over a male mold, vacuum being applied usually after the sheet is on the mold. Alternatively, a sheet is disposed over a female mould and a vacuum applied beneath the sheet to pull the sheet against the mold. Plug-assist forming comprises a plug which mechanically pushes the sheet to the bottom of a mould cavity, and in plug-assist vacuum forming a vacuum applied from beneath the mould retains the sheet aginst the mould cavity.

In general, the thermoformable receiving film, in the form of a flat sheet, is heated until the thermoplastic material is sufficiently softened so that it can be formed into a shaped product. The sheet is aligned over a mould, typically a cast aluminium mould. The heated flat receiving film is then forced into contact with the surface of the mould by vacuum, air pressure, and/or direct mechanical force so that the receiving sheet assumes the contours of the mould. The sheet is held against the mould and allowed to cool and, once cooled, maintains the shape of the mould thereby creating a part. The cooled thermoformed shaped product is then ejected from the mould and passed to the packing station. Vacuum thermoforming is preferred. The moulds are typically temperature-controlled with internal cooling channels to allow for consistent mould temperature. Aluminium is the preferred mould material because it has very high coefficient of thermal conductivity that allows consistent cooling cycle times through the entire production run of components.

Thermoforming techniques are well-known in the art and a variety of thermoforming equipment is available commercially from many suppliers worldwide (for example Multivac, Swindon UK).

The food product is placed in the cavity formed in the receiving film. The covering film is then aligned with the filled receiving film and the two films brought into contact and heat-sealed together by the application of heat and pressure, thereby forming sealed packaging. Vacuum may be, and typically is, applied during the sealing process to evacuate the packaging. Typically, the heat-seal bond is effected within a temperature range of 120 to about 180°C. Typically, the residence-time required to effect the heat-seal bond is from about 0.1 to about 10 seconds. The sealing plate pressure is from about 1 to 10 bars.

The packaged food product is typically then cooled to a temperature between about -7 and 5 °C in a refrigerator or freezer, and kept at the desired temperature during storage and transportation to the wholesaler, retailer or consumer until the food product is ready to be consumed.

The strength of the heat-seal bond between the receiving and covering films may be varied in order to achieve the required performance before, during and after the cooking cycle. The strength of the heat-seal bond may be varied by varying the chemistry and thickness of the heat-seal layer, as well as the process conditions used to form the heat-seal bond.

In a first embodiment, the heat-seal bond is peelable, and the heat-seal bond strength between the receiving and covering films is sufficiently strong that the heat-seal bond is not broken during the cooking cycle, whilst allowing the consumer to peel the films apart upon completion of the cooking cycle. In this embodiment, the heat-seal bond strength between the first surfaces of the covering and receiving films is typically in the range of 200 to 1800 g/25mm, and preferably at least 300, more preferably at least 400g/25mm, and preferably in the range of 400-1500g/25mm, preferably 400-1200 g/25mm. Such peelable heat-seal bonds may suitably be formed using the polymeric materials described hereinabove in respect of, for instance, Embodiments B3 and B4, and such materials may be used on the first surfaces of either the receiving film or the covering film or both, as described above.

In an alternative embodiment, the heat-seal bond may be engineered to be so strong that a meaningful determination of the heat-seal bond strength cannot be obtained because the covering and/or receiving film fail internally prior to failure of the heat-seal bond therebetween. In that case, the packaging may need to be ruptured manually by the consumer. Suitable materials for this embodiment include the materials described hereinabove in respect of Embodiment B1.

In a further alternative embodiment, the heat-seal bond may be ruptured during the cooking cycle, in order to provide self-venting packaging. An increase in the pressure within the packaging above a pre-determined threshold during the cooking cycle causes rupture of the heat-seal bond, enabling venting to occur through the ruptured heat-seal bond. Variation of the chemistry and thickness of the heat-sealable layer, and/or variation of the heat-seal bond-forming process conditions, as described above, can provide the manufacturer with control over the time at which the bond fails during the cooking cycle for a fixed and prescribed power input during the cooking cycle. In addition, variation of the package design and the sealing technique can provide the manufacturer with control of the locus of failure within the heat-seal bond, which may be advantageous in preventing undesirable release from the packaging of meat/fish juice during the cooking cycle, and/or in allowing an easy and clean opening of the packaging by the consumer once the cooking cycle has finished.

In one embodiment, a packaging, particularly a self-venting packaging, can be provided with a liquid-absorbent material or layer which is disposed between the receiving film and the food product in order to absorb any liquid released therefrom during the cooking cycle and prevent it from flowing out of the packaging.

In addition, when disposing meat or fish in the thermoformed receiving film, external contaminants, such as blood from the meat or various additives including sauces and browning agents etc., may come into contact with the (peripheral) portion of the first surface of the receiving film which is to be heat-sealed to the covering film. This may result in poor seal properties and eventually a weak overall package. In one embodiment of the present invention, this problem is addressed by increasing the thickness of the heat-seal layer and/or changing the identity of the heat-seal layer. For instance, the thickness of the heat-seal layer of the receiving and/or covering films may be selected to be about 25µm or above. This problem may be addressed by alternatively, or additionally, utilising the arrangement described hereinabove wherein both the covering and receiving films are multilayer films each comprising a heat-sealable layer comprising the first surface thereof.

### Cooking Process

The packaged food product is dual-ovenable, i.e. the consumer has the choice of whether to cook the packaged food product in a microwave or conventional oven. Typically, the packaged food product is ovenable up to temperatures of about 205°C (400F) and typically in the range 100 to 180°C.

One of the key attributes of the packaging described herein is that it remains around the packaged food product during the cooking cycle. The packaged food product can be placed directly in the oven from cooled storage in the refrigerator, and in one embodiment from frozen storage, without the food product itself coming into contact with unhygienic surfaces or human skin during transport or storage.

Advantageously, the packaging described herein exhibits improved "cook-properties", i.e. exhibits improved taste and/or texture and/or appearance, in comparison with conventional cook-in packaging. For instance, the packaging enables the cooked product to "brown" in a manner more commonly associated with traditional cooking methods.

Advantageously, the packaging described herein exhibits a reduction in the cook-time for a given product in comparison with conventional cook-in packaging.

Advantageously, the packaging described herein allows a frozen packaged food product to be placed directly into the oven from frozen without danger of bacterial contamination of the cooked food product. It is believed that the packaging described herein promotes heat-transfer throughout the whole of the food product, such that any pathogens or bacteria present in the raw product are eliminated during the cook cycle.

The term "meat" as used herein refers to both red and white meat, and includes for instance beef, lamb, pork, venison, horse, kangaroo and poultry (including for instance chicken, turkey and game-bird). The term "fish" as used herein includes any fish and shellfish including crustaceans, shrimps, lobsters and mussels etc.

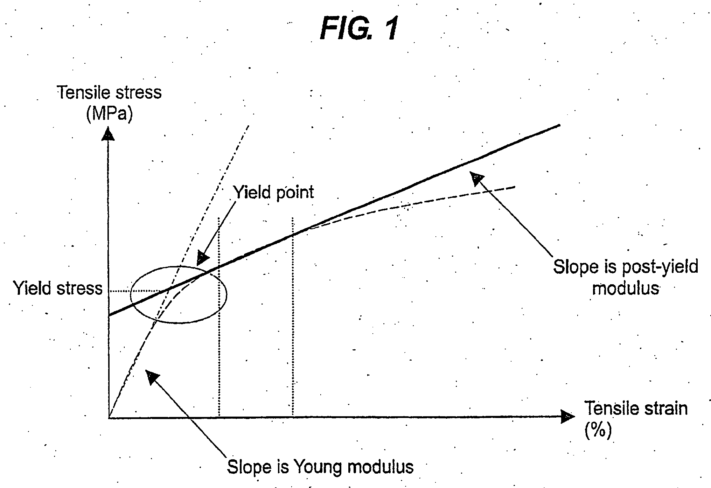

The following test methods may be used to characterise the polymeric film:
(i) Clarity of the film may be evaluated by measuring total light transmission (TLT) and haze (% of scattered transmitted visible light) through the total thickness of the film using a Gardner XL 211 hazemeter in accordance with ASTM D-1003-61.
(ii) Heat-seal strength of the covering layer to itself, or of the covering layer to the receiving layer, is measured by positioning together and heating the heat-sealable layer(s) of the two film samples at 140°C for one second under a pressure of 275 kPa (40 psi). The sealed film is cooled to room temperature, and the sealed composite cut into 25mm wide strips. The heat-seal strength is determined by measuring the force required under linear tension per unit width of seal to peel the layers of the film apart at a constant speed of 4.23 mm/second.
(iii) Water vapour transmission rate is measured according to ASTM D3985.
(iv) Oxygen transmission rate is measured according to ASTM F1249.
(v) Shrinkage at a temperature of 90°C is measured by placing the sample in a heated water bath at that temperature for 30 seconds. The shrinkage behaviour is assessed using a number of film samples.
(vi) Thermoformability can be inferred from the stress-strain curve above the glass transition temperature of the polymer, with reference to the parameters of Young's modulus, yield stress, and post-yield modulus, and particularly with reference to yield stress, and post-yield modulus. A representative stress-strain curve is presented in Figure 1.

The Young's modulus is a measure of the stiffness of a given material. The Young's modulus represents the rate of change of stress with strain and can be determined experimentally from the initial slope of the stress-strain curve during tensile testing. Thus, the Young's modulus is the ratio of the tensile strength to the elongation below the yield stress. The value quoted herein is calculated as the highest ratio between 0 and 10% elongation.

The yield stress may be determined from the stress-strain curve exhibited during tensile testing and represents the stress at which permanent deformation of a stressed specimen begins to take place, i.e. the tensile stress above which the material elongates beyond recovery. The value quoted herein is calculated as the stress at which the tensile to elongation ratio has decreased by 60% from its highest value (i.e the Young modulus). Desirably, the yield stress should be as close to zero as possible at the processing temperature of the thermoforming process.

The post-yield modulus is a measure of strain hardening of a given material and is the slope of the stress-strain curve when a material is strained beyond the yield point. An increasing stress is required to produce additional deformation. Thus, the post-yield modulus coefficient is the ratio of the tensile strength to the elongation above the yield stress (and naturally below the elongation at break). The value quoted herein is calculated as the average ratio between an elongation (%) range from E1 to E2 where (i) 10 ≤ (E2-E1) ≤ 20; (ii) 60 ≤ E2 ≤ 120; and (iii) 50 ≤ E1 ≤ 100 (which range is typically between 60 and 80%, but in some cases between 40 and 60% or 50 and 60% or 100 and 120%, depending on the shape of the curve). Desirably, the post-yield modulus should be as close to zero as possible in the processing region of interest, i.e. the strain and temperature regions utilised in the thermoforming process.

The Young's modulus, the yield stress and the post-yield modulus coefficient are measured at various temperatures: 25°C; Tg; Tg+50°C; and Tg+100°C. Using a straight edge and a calibrated sample cutter (10 mm ±0.5mm in the middle of the strip), five dog-bone shaped strips (500mm in length) of the film are cut along the machine direction. The same procedure is repeated for the transverse direction. Each sample is tested using an Instron model 3111 materials test machine, using pneumatic action grips with rubber jaw faces and a hot box. The temperature is varied as required. The crosshead speed (rate of separation) is 25 mm.min⁻¹. The strain rate is 50%. The elongation is accurately measured by video-recording the distance between two black spots premarked on the strip.
(vii) Glass transition temperature is measured by Differential Scanning Calorimetry (DSC). A 10mg polymer specimen taken from the film is dried for 12 hours under vacuum at 80°C. The dried specimen is heated at 290°C for 2 minutes and then quenched onto a cold block. The quenched specimen is heated from 0°C to 290°C at a rate of 20°C/minute using a Perkin-Elmer DSC7B. The Perkin Elmer was calibrated at a heating rate of 20°C/minute, so cooling temperatures have been corrected by adding 3.9°C to the computer-generated results. The glassy transition temperature quoted is onset.
(viii) The crystallinity percentage can be measured by Differential Scanning Calorimetry. A 5mg sample taken from the film is heated from 0 to 300°C at 80°C/minute on the Perkin Elmer DSC7B. The crystallinity percentage assumes that crystallinity is present in all the samples.

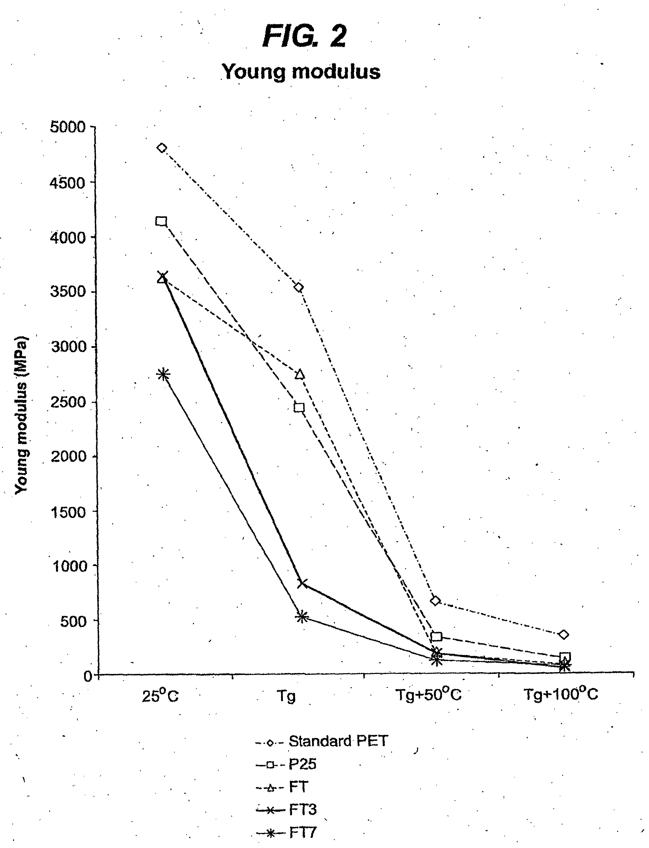

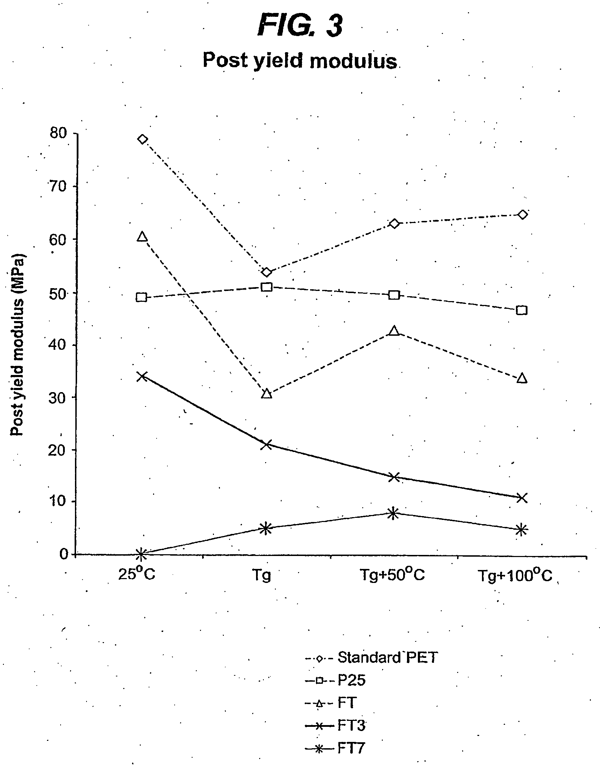

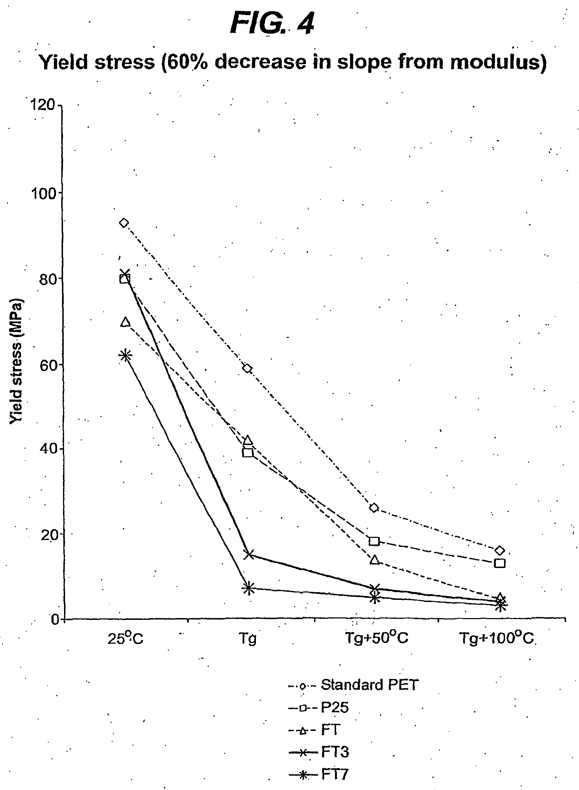

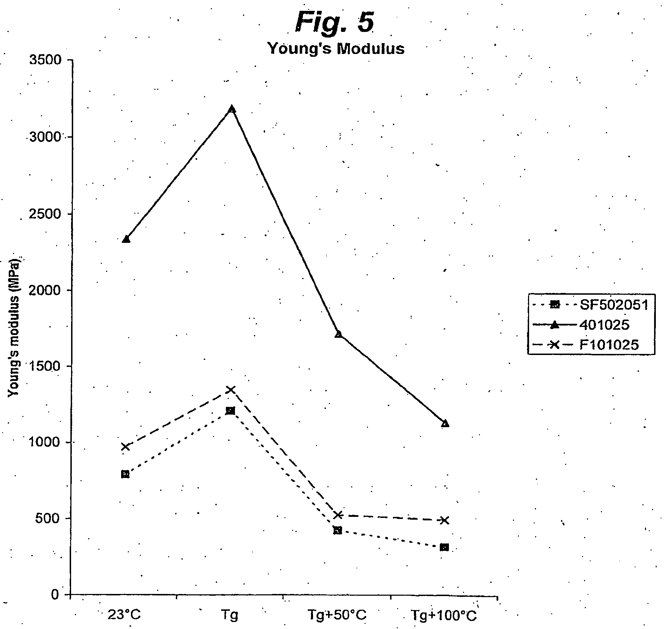

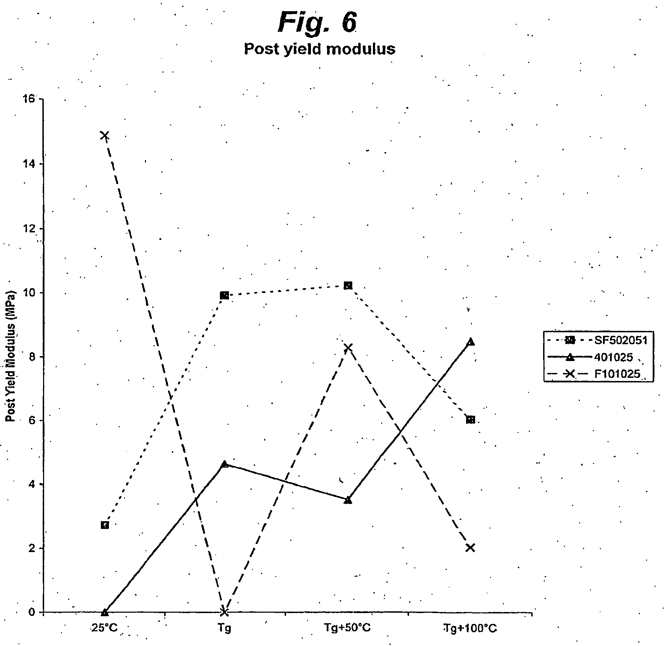

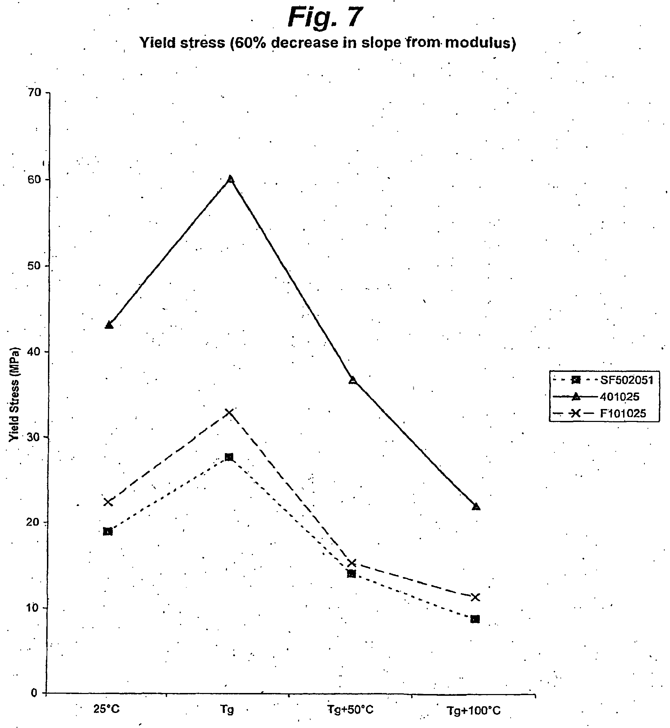

Figure 1 is a representative stress-strain curve of a thermoformable polymer. Figures 2, 3, and 4 are plots of Young's modulus, post-yield modulus coefficient and yield stress at various temperatures. Figures 5, 6 and 7 are plots of Young's modulus, post yield modulus coefficient and yield stress at various temperatures.

The invention is further illustrated by the following examples. It will be appreciated that the examples are for illustrative purposes only and are not intended to limit the invention as described above. Modification of detail may be made without departing from the scope of the invention.

### EXAMPLES

### Example 1

A cavity was introduced into a thermoformable receiving film (Mylar® P25 (50µm); Dupont Teijin Films) by passing it through a vacuum plug-assist thermoforming apparatus (Multivac R5200; 50 mm draw depth) in which the receiving film was pre-heated and forced into the mould fitted with chamfered corners. The preheat temperature was set up at 225°C. The mould was cooled and the thermoformed receiving film ejected from the mould. A portion of chicken was placed in the cavity, and the covering film (Mylar® OL2 (25 µm); Dupont Teijin Films) placed on top of the filled receiving film so that the heat-sealable surface of the covering film was in contact with the chicken and receiving film. A heat-seal bond was formed on the same line machine (Multivac R5200) at a temperature of 160°C and a residence time in the heat-seal clamp of 0.5 seconds at a pressure of 2 bars.

The packaged chicken portion showing a weight of about 250 g was then placed in a conventional oven at 180°C, for 30 minutes, and once the cook cycle was complete, the package was broken by manually peeling the covering film from the receiving film. The chicken exhibited even cooking with browning.

### Example 2 (Reference)

The procedure of Example 1 was repeated except that the thermoformable receiving polyester film was HFF - FT (19µm) film, manufactured by Teijin Dupont Films, and similarly favourable results were observed.

### Example 3 (Reference)

The procedure of Example 1 was repeated except that the thermoformable receiving polyester film was HFF - FT3 (25µm) film, manufactured by Teijin Dupont Films, and similarly favourable results were observed.

### Example 4 (Reference)

The procedure of Example 1 was repeated except that the thermoformable receiving polyester film was HFF - FT7 (50µm) film, manufactured by Teijin Dupont Films, and similarly favourable results were observed.

The glass transition temperature (Tg) and crystallinity were measured for each of the thermoformable receiving films of Examples 1 to 4, together with the stress-strain curves at various temperatures (which allows calculations of Young's modulus, yield stress and post-yield modulus at each temperature). The values obtained from the tensile experiments are expressed as an average of the measurements in the transverse and machine directions of the film. The data are presented in Table 1 below, together with the corresponding data for a Control sample (C) which was a standard (non-thermoformable) PET film (50µm). The data in Table 1 are also presented in Figures 2, 3 and 4. The data illustrate the general characteristics required for thermoformability, namely a relatively lower value for at least one, and preferably all, of Young's modulus, yield stress and post-yield modulus, and particularly yield stress and post-yield modulus, at temperatures above the Tg. As discussed above, it is the film's behaviour above its Tg which defines its suitability as a thermoformable film. The thermoformability of the 5 films tested in these experiments was assessed comparatively using the thermoforming apparatus described herein, and the order of the ease of thermoformability was found to be Example 4 > Example 3 > Example 2 > Example 1 > Control C.

### Example 5 (Reference)

The procedure of Example 1 was repeated except that the thermoformable receiving polyester film was Dartek® SF502 (51µm), nylon 6,6 film manufactured by DuPont.

### Example 6 (Reference)

The procedure of Example 1 was repeated except that the thermoformable receiving polyester film was Dartek® 0401 (25µm) film, nylon 6,6 film manufactured by DuPont.

### Example 7 (Reference)

The procedure of Example 1 was repeated except that the thermoformable receiving polyester film was Dartek® F101 (25µm) film, nylon 6,6 film manufactured by DuPont.

The glass transition temperature (Tg) and crystallinity were measured for each of the thermoformable receiving films of Reference Examples 5 to 7, together with the stress-strain curves at various temperatures. The values obtained from the tensile experiments are expressed as an average of the measurements in the transverse and machine directions of the film. The data are presented in Table 2 below. The data in Table 2 are also presented in Figures 5, 6 and 7. The data illustrate the general characteristics required for thermoformability, namely a relatively lower value for at least one, and preferably all, of Young's modulus, yield stress and post-yield modulus, and particularly yield stress and post-yield modulus, at temperatures above the Tg. As discussed above, it is the film's behaviour above its Tg which defines its suitability as a thermoformable film.

The thermoformability of the 3 films tested was assessed comparatively using the thermoforming apparatus described herein, and the order of ease of thermoformability was found to be Example 5>Example 7>Example 6.

**Table 1**

| **Ex.** | **Tg (°C)** | **Cryst. (%)** | **25°C** | | | **Tg** | | | **Tg+50°C** | | | **Tg+100°C** | | |
|---|---|---|---|---|---|---|---|---|---|---|---|---|---|---|
| | | | **Youngs Mod. (MPa)** | **P-Y Mod. (MPa)** | **Yield Stress (MPa)** | **Youngs Mod. (MPa)** | **P-Y Mod. (MPa)** | **Yield Stress (MPa)** | **Youngs Mod. (MPa)** | **P-Y Mod. (MPa)** | **Yield Stress (MPa)** | **Youngs Mod. (MPa)** | **P-Y Mod. (MPa)** | **Yield Stress (MPa)** |
| | | | | | | | | | | | | | | |
| C. | 76 | 45 | 4812 | 79 | 93 | 3540 | 54 | 59 | 678 | 63 | 26 | 361 | 65 | 16 |
| | | | | | | | | | | | | | | |
| 1. | 58 | 38 | 4175 | 49 | 80 | 2472 | 51 | 39 | 344 | 50 | 18 | 160 | 47 | 13 |
| | | | | | | | | | | | | | | |
| 2.* | 82 | 29 | 3634 | 60 | 70 | 2739 | 31 | 42 | 209 | 43 | 14 | 98 | 34 | 5 |
| | | | | | | | | | | | | | | |
| 3.* | 50 | 38 | 3654 | 34 | 81 | 819 | 21 | 15 | 203 | 15 | 7 | 78 | 11 | 4 |
| | | | | | | | | | | | | | | |
| 4.* | 78 | 7 | 2769 | 0 | 62 | 531 | 5 | 7 | 122 | 8 | 5 | 91 | 5 | 3 |

| | | | | | | | | | | | | | | |
|---|---|---|---|---|---|---|---|---|---|---|---|---|---|---|
| *Reference examples | | | | | | | | | | | | | | |

**Table 2**

| **Ex.** | **Tg (°C)** | **23°C** | **25°C** | | **Tg** | | | **Tg+50°C** | | | **Tg+100°C** | | |
|---|---|---|---|---|---|---|---|---|---|---|---|---|---|
| | | **Youngs Mod. (MPa)** | **P-Y Mod. (MPa)** | **Yield Stress (MPa)** | **Youngs Mod. (MPa)** | **P-Y Mod. (MPa)** | **Yield Stress (MPa)** | **Youngs Mod. (MPa)** | **P-Y Mod. (MPa)** | **Yield Stress (MPa)** | **Youngs Mod. (MPa)** | **P-Y Mod. (MPa)** | **Yield Stress (MPa)** |
| | | | | | | | | | | | | | |
| 5* | 44 | 790 | 2.7 | 19 | 1209 | 9.9 | 28 | 425 | 10.2 | 14 | 314 | 6.0 | 9 |
| | | | | | | | | | | | | | |
| 6* | 38 | 2338 | 0 | 43 | 3185 | 4.6 | 60 | 1346 | 3.5 | 37 | 1130 | 8.0 | 22 |
| | | | | | | | | | | | | | |
| 7* | 42 | 970 | 14.9 | 22 | 1346 | 0 | 33 | 526 | 8 | 15 | 492 | 2 | 11 |

| | | | | | | | | | | | | | |
|---|---|---|---|---|---|---|---|---|---|---|---|---|---|
| *Reference example | | | | | | | | | | | | | |

## Claims

1. A method of packaging ovenable fish or meat, said method comprising the steps of:
(i) providing a dual-ovenable thermoformable polymeric receiving film having a first and second surface and a dual-ovenable polymeric covering film having a first and second surface, wherein said receiving film consists of a mono-layer biaxially oriented polyester substrate, an optional barrier layer, and an optional heat-sealable layer which where present constitutes the first surface of the receiving film,
wherein said receiving film substrate is a substrate layer of copolyester comprising repeating units derived from an aromatic dicarboxylic acid and an aliphatic dicarboxylic acid of the general formula CₙH₂ₙ(COOH)₂ wherein n is 2 to 10, and one or more diol(s),
wherein said receiving and covering films are separate pieces of film, wherein at least one of said first surfaces of said receiving and covering films is a heat-sealable surface, wherein the shrinkage of the receiving film is less than 3% in the machine dimension and transverse dimension, and wherein the total thickness of the receiving film is from 12 to 200µm;
(ii) providing a raised outer portion and an indented central portion in said receiving film by thermoforming;
(iii) disposing on the first surface of the receiving film a portion of meat or fish;
(iv) disposing the covering film over the portion of meat or fish such that the first surface of the covering film is disposed towards the first surface of the receiving film;
(v) contacting the peripheral portions of the first surface of the receiving film and the first surface of the covering film and forming a heat-seal bond therebetween; &
(vi) optionally freezing the packaged meat or fish.

2. A method of cooking fish or meat comprising the steps of:
(i) providing a dual-ovenable thermoformable polymeric receiving film having a first and second surface and a dual-ovenable polymeric covering film having a first and second surface, wherein said receiving film consists of a mono-layer biaxially oriented polyester substrate, an optional barrier layer, and an optional heat-sealable layer which where present constitutes the first surface of the receiving film,
wherein said receiving film substrate is a substrate layer of copolyester comprising repeating units derived from an aromatic dicarboxylic acid and an aliphatic dicarboxylic acid of the general formula CₙH₂ₙ(COOH)₂ wherein n is 2 to 10. and one or more diol(s),
wherein said receiving and covering films are separate pieces of film, wherein at least one of said first surfaces of said receiving and covering films is a heat-sealable surface, wherein the shrinkage of the receiving film is less than 3% in the machine dimension and transverse dimension, and wherein the total thickness of the receiving film is from 12 to 200µm;
(ii) providing a raised outer portion and an indented central portion in said receiving film by thermoforming;
(iii) disposing on the first surface of the receiving film a portion of meat or fish;
(iv) disposing the covering film over the portion of meat or fish such that the first surface of the covering film is disposed towards the first surface of the receiving film;
(v) contacting the peripheral portions of the first surface of the receiving film and the first surface of the covering film and forming a heat-seal bond therebetween; &
(vi) optionally freezing the packaged meat or fish.
(vii) cooking the packaged fish or meat in an oven.

3. A method according to claim 1 or 2 wherein the forming of the receiving film is effected using the technique of vacuum thermoforming.

4. A method according to any preceding claim wherein the aliphatic dicarboxylic acid is present in the copolyester in an amount of from 1 to 20 mole % based on the total amount of dicarboxylic acid components in the copolyester.

5. A method according to any preceding claim, wherein the first surface of the covering film is the heat-sealable surface.

6. A method according to any preceding claim wherein said receiving film comprises an additional heat-sealable layer, the heat-sealable layer constituting said first surface of the receiving film.

7. A method according to claim 6 wherein said heat-sealable layer comprises a copolyester derived from an aliphatic diol, an aromatic dicarboxylic acid and an aliphatic dicarboxylic acid, wherein the concentration of the aromatic dicarboxylic acid is in the range from 45 to 75 mol% based on the dicarboxylic acid components of the copolyester, and the concentration of the aliphatic dicarboxylic acid is in the range from 25 to 55 mole % based on the dicarboxylic acid components of the copolyester.

8. A method according to any preceding claim wherein said oriented polyester receiving film has been heat-set under dimensional restraint at a temperature above the glass transition temperature of the polyester but below the melting temperature thereof.

9. A method according to any preceding claim wherein the covering film comprises polyester.

10. A method according to any preceding claim wherein the covering film comprises polyethylene terephthalate.

11. A method according to any preceding claim wherein said covering film comprises a substrate layer and a heat-sealable layer, the heat-sealable layer constituting said first surface of the covering film.

12. A method according to claim 11 wherein said heat-sealable layer comprises a copolyester derived from an aliphatic diol, an aromatic dicarboxylic acid and an aliphatic dicarboxylic acid, wherein the concentration of the aromatic dicarboxylic acid is in the range from 45 to 80 mol% based on the dicarboxylic acid components of the copolyester, and the concentration of the aliphatic dicarboxylic acid is in the range from 20 to 55 mole % based on the dicarboxylic acid components of the copolyester.

13. A method according to any preceding claim wherein said receiving and covering films comprise a barrier layer, the barrier layer constituting the second surfaces of the receiving and covering films, wherein the water vapour transmission rate is in the range of 0.01 to 10g/100 inches²/day (preferably 0.01 to 1.0g/100 inches²/day, preferably 0.1 to 1g/100 inches²/day), and/or the oxygen transmission rate is in the range of 0.01 to 10 cm³/100 inches²/day/atm (preferably 0.01 to 1 cm³/100 inches²/day/atm, more preferably 0.1 to 1 cm³/100 inches²/day/atm).

14. A method according to claim 13 wherein the barrier layer comprises PVdC.

15. A method according to any preceding claim wherein the covering film and optionally the receiving film exhibit a haze of <10%.

16. A method according to claim 2 wherein the packaged meat or fish is frozen and is transferred directly from the freezer to the oven.

17. A method according to any preceding claim wherein said oven is a microwave or convection oven.

## Patentansprüche

1. Verfahren zum Verpacken von ofengeeignetem Fisch oder Fleisch, wobei das Verfahren die Schritte umfasst:
(i) Bereitstellen eines dual ofengeeigneten, wärmeformbaren polymeren Aufnahmefilms mit einer ersten und einer zweiten Oberfläche und eines dual ofengeeigneten polymeren Abdeckfilms mit einer ersten und einer zweiten Oberfläche, wobei der Aufnahmefilm aus einem biaxial orientation Einzelschicht-Polyestersubstrat, einer optionalen Barriereschicht und einer optionalen heißsiegelfähigen Schicht, die, falls vorhanden, die erste Oberfläche des Aufnahmefilms bildet, besteht, wobei das Aufnahmefilmsubstrat eine Substratschicht aus Copolyester ist, die Wiederholungseinheiten abgeleitet von einer aromatischen Dicarbonsäure und einer aliphatischen Dicarbonsäure der allgemeinen Formel CₙH₂ₙ(COOH)₂, wobei n 2 bis 10 ist, und einem oder mehreren Diolen umfasst.
wobei der Aufnahme- und der Abdeckfilm getrennte Filmstücke sind, wobei wenigstens eine von den ersten Oberflächen des Aufnahme- und des Abdeckfilms eine heißsiegelfähige Oberfläche ist, wobei die Schrumpfung des Aufnahmefilms in der Maschinenrichtung und der Querrichtung weniger als 3 % beträgt und wobei die Gesamtdicke des Aufnahmefilms von 12 bis 200 µm beträgt;
(ii) Bereitstellen eines erhöhten äußeren Teils und eines vertieften mittleren Teils in dem Aufnahmefilm durch Thermoformen;
(iii) Anordnen einer Portion Fleisch oder Fisch auf der ersten Oberfläche des Aufnahmefilms;
(iv) Anordnen des Abdeckfilms über der Portion Fleisch oder Fisch, so dass die erste Oberfläche des Abdeckfilms der ersten Oberfläche des Aufnahmefilms zugewandt ist;
(v) Inkontaktbringen der Randabschnitte der ersten Oberfläche des Aufnahmefilms und der ersten Oberfläche des Abdeckfilms und Bilden einer Heißsiegelverbindung dazwischen; und
(vi) gegebenenfalls Einfrieren des verpackten Fleischs oder Fischs.

2. Verfahren zum Kochen von Fisch oder Fleisch, umfassend die Schritte:
(i) Bereitstellen eines dual ofengeeigneten, wärmeformbaren polymeren Aufnahmefilms mit einer ersten und einer zweiten Oberfläche und eines dual ofengeeigneten polymeren Abdeckfilms mit einer ersten und einer zweiten Oberfläche, wobei der Aufnahmefilm aus einem biaxial orientierten Einzelschicht-Polyestersubstrat, einer optionalen Barriereschicht und einer optionalen heißsiegelfähigen Schicht, die, falls vorhanden, die erste Oberfläche des Aufnahmefilms bildet, besteht, wobei das Aufnahmefilmsubstrat eine Substratschicht aus Copolyester ist, die Wiederholungseinheiten abgeleitet von einer aromatischen Dicarbonsäure und einer aliphatischen Dicarbonsäure der allgemeinen Formel CₙH₂ₙ(COOH)₂, wobei n 2 bis 10 ist, und einem oder mehreren Diolen umfasst.
wobei der Aufnahme- und der Abdeckfilm getrennte Filmstücke sind, wobei wenigstens eine von den ersten Oberflächen des Aufnahme- und des Abdeckfilms eine heißsiegelfähige Oberfläche ist, wobei die Schrumpfung des Aufnahmefilms in der Maschinenrichtung und der Querrichtung weniger als 3 % beträgt und wobei die Gesamtdicke des Aufnahmefilms von 12 bis 200 µm beträgt;
(ii) Bereitstellen eines erhöhten äußeren Teils und eines vertieften mittleren Teils in dem Aufnahmefilm durch Thermoformen;
(iii) Anordnen einer Portion Fleisch oder Fisch auf der ersten Oberfläche des Aufnahmefilms;
(iv) Anordnen des Abdeckfilms über der Portion Fleisch oder Fisch, so dass die erste Oberfläche des Abdeckfilms der ersten Oberfläche des Aufnahmefilms zugewandt ist;
(v) Inkontaktbringen der Randabschnitte der ersten Oberfläche des Aufnahmefilms und der ersten Oberfläche des Abdeckfilms und Bilden einer Heißsiegelverbindung dazwischen; und
(vi) gegebenenfalls Einfrieren des verpackten Fleischs oder Fischs;
(vii) Kochen des verpackten Fischs oder Fleischs in einem Ofen.

3. Verfahren gemäß Anspruch 1 oder 2, wobei das Bilden des Aufnahmefilms unter Verwendung des Vakuum-Thermoformverfahrens durchgeführt wird.

4. Verfahren gemäß einem der vorstehenden Ansprüche, wobei die aliphatische Dicarbonsäure in dem Copolyester in einer Menge von 1 bis 20 mol-% bezogen auf die Gesamtmenge von Dicarbonsäurekomponenten in dem Copolyester vorhanden ist.

5. Verfahren gemäß einem der vorstehenden Ansprüche, wobei die erste Oberfläche des Abdeckfilms die heißsiegelfähige Oberfläche ist.

6. Verfahren gemäß einem der vorstehenden Ansprüche, wobei der Aufnahmefilm eine zusätzliche heißsiegelfähige Schicht umfasst, wobei die heißsiegelfähige Schicht die erste Oberfläche des Aufnahmefilms bildet.

7. Verfahren gemäß Anspruch 6, wobei die heißsiegelfähige Schicht einen Copolyester abgeleitet von einem aliphatischen Diol, einer aromatischen Dicarbonsäure und einer aliphatischen Dicarbonsäure umfasst, wobei die Konzentration der aromatischen Dicarbonsäure in dem Bereich von 45 bis 75 mol-% bezogen auf die Dicarbonsäurekomponenten des Copolyesters liegt und die Konzentration der aliphatischen Dicarbonsäure in dem Bereich von 25 bis 55 mol-% bezogen auf die Dicarbonsäurekomponenten des Copolyesters liegt.

8. Verfahren gemäß einem der vorstehenden Ansprüche, wobei der orientierte Polyester-Aufnahmefilm unter Einschränkung der Abmessungen bei einer Temperatur über der Glasübergangstemperatur des Polyesters aber unter seiner Schmelztemperatur wärmegehärtet worden ist.

9. Verfahren gemäß einem der vorstehenden Ansprüche, wobei der Abdeckfilm Polyester umfasst.

10. Verfahren gemäß einem der vorstehenden Ansprüche, wobei der Abdeckfilm Polyethylenterephthalat umfasst.

11. Verfahren gemäß einem der vorstehenden Ansprüche, wobei der Abdeckfilm eine Substratschicht und eine heißsiegelfähige Schicht umfasst, wobei die heißsiegelfähige Schicht die erste Oberfläche des Abdeckfilms bildet.

12. Verfahren gemäß Anspruch 11, wobei die heißsiegelfähige Schicht einen Copolyester abgeleitet von einem aliphatischen Diol, einer aromatischen Dicarbonsäure und einer aliphatischen Dicarbonsäure umfasst, wobei die Konzentration der aromatischen Dicarbonsäure in dem Bereich von 45 bis 80 mol-% bezogen auf die Dicarbonsäurekomponenten des Copolyesters liegt und die Konzentration der aliphatischen Dicarbonsäure in dem Bereich von 20 bis 55 mol-% bezogen auf die Dicarbonsäurekomponenten des Copolyesters liegt.

13. Verfahren gemäß einem der vorstehenden Ansprüche, wobei der Aufnahme- und der Abdeckfilm eine Barriereschicht umfassen, wobei die Barriereschicht die zweiten Oberflächen des Aufnahme- und des Abdeckfilms bildet, wobei die Wasserdampfdurchlässigkeitsrate in dem Bereich von 0,01 bis 10 g/100 Inch²/Tag liegt (vorzugsweise 0,01 bis 1,0 g/100 Inch²/Tag, vorzugsweise 0,1 bis 1 g/100 Inch²/Tag) und/oder die Sauerstoffdurchlässigkeitsrate in dem Bereich von 0,01 bis 10 cm³/100 Inch²/Tag/atm liegt (vorzugsweise 0,01 bis 1 cm³/100 Inch²/Tag/atm, bevorzugter 0,1 bis 1 cm³/100 Inch²/Tag/atm).

14. Verfahren gemäß Anspruch 13, wobei die Barriereschicht PVdC umfasst.

15. Verfahren gemäß einem der vorstehenden Ansprüche, wobei der Abdeckfilm und gegebenenfalls der Aufnahmefilm eine Trübung von < 10 % aufweisen.

16. Verfahren gemäß Anspruch 2, wobei das/der verpackte Fleisch oder Fisch gefroren ist und direkt von einem Tiefkühlgerät zu dem Ofen überführt wird.

17. Verfahren gemäß einem der vorstehenden Ansprüche, wobei der Ofen ein Mikrowellen- oder Konvektionsofen ist.

## Revendications

1. Méthode d'emballage d'une viande ou d'un poisson allant au four, ladite méthode comprenant les étapes consistant à :
(i) fournir un film récepteur polymère thermoformable allant dans deux types de four, ayant une première et une deuxième surface, et un film protecteur polymère allant dans deux types de four, ayant une première et une deuxième surface, où ledit film récepteur est constitué d'un substrat monocouche de polyester orienté de manière biaxiale, d'une couche barrière facultative, et d'une couche thermosoudable facultative qui constitue, lorsqu'elle est présente, la première surface du film récepteur,
où ledit substrat de film récepteur est une couche de substrat de copolyester comprenant des motifs répétitifs dérivés d'un acide dicarboxylique aromatique et d'un acide dicarboxylique aliphatique de formule générale CₙH₂ₙ(COOH)₂ où n va de 2 à 10, et d'un ou plusieurs diols.
où lesdits films récepteur et protecteur sont des pièces séparées de film, où au moins l'une desdites premières surfaces desdits films récepteur et protecteur est une surface thermosoudable, où le retrait du film récepteur est inférieur à 3% dans le sens machine et dans le sens transversal, et où l'épaisseur totale du film récepteur va de 12 à 200 µm ;
(ii) fournir une portion externe surélevée et une portion centrale alvéolée dans ledit film récepteur par thermoformage ;
(iii) disposer, sur la première surface du film récepteur, une portion de viande ou de poisson ;
(iv) disposer le film protecteur sur la portion de viande ou de poisson de sorte que la première surface du film protecteur soit disposée vers la première surface du film récepteur ;
(v) mettre en contact les portions périphériques de la première surface du film récepteur et de la première surface du film protecteur et former une thermosoudure entre celles-ci ; et
(vi) éventuellement congeler la viande ou le poisson emballé(e).

2. Méthode de cuisson d'une viande ou d'un poisson, comprenant les étapes consistant à :
(i) fournir un film récepteur polymère thermoformable allant dans deux types de four, ayant une première et une deuxième surface, et un film protecteur polymère allant dans deux types de four, ayant une première et une deuxième surface, où ledit film récepteur est constitué d'un substrat monocouche de polyester orienté de manière biaxiale, d'une couche barrière facultative, et d'une couche thermosoudable facultative qui constitue, lorsqu'elle est présente, la première surface du film récepteur,
où ledit substrat de film récepteur est une couche de substrat de copolyester comprenant des motifs répétitifs dérivés d'un acide dicarboxylique aromatique et d'un acide dicarboxylique aliphatique de formule générale CₙH₂ₙ(COOH)₂ où n va de 2 à 10, et d'un ou plusieurs diols.
où lesdits films récepteur et protecteur sont des pièces séparées de film, où au moins l'une desdites premières surfaces desdits films récepteur et protecteur est une surface thermosoudable, où le retrait du film récepteur est inférieur à 3% dans le sens machine et dans le sens transversal, et où l'épaisseur totale du film récepteur va de 12 à 200 µm ;
(ii) fournir une portion externe surélevée et une portion centrale alvéolée dans ledit film récepteur par thermoformage ;
(iii) disposer, sur la première surface du film récepteur, une portion de viande ou de poisson ;
(iv) disposer le film protecteur sur la portion de viande ou de poisson de sorte que le première surface du film protecteur soit disposée vers la première surface du film récepteur ;
(v) mettre en contact les portions périphériques de la première surface du film récepteur et de la première surface du film protecteur et former une thermosoudure entre celles-ci ; et
(vi) éventuellement congeler la viande ou le poisson emballé(e) ;
(vii) cuire la viande ou le poisson emballé(e) dans un four.

3. Méthode selon la revendication 1 ou 2, où la formation du film récepteur est effectuée en utilisant la technique de thermoformage sous vide.

4. Méthode selon l'une quelconque des revendications précédentes, où l'acide dicarboxylique aliphatique est présent dans le copolyester selon une quantité allant de 1 à 20% molaire sur la base de la quantité totale de composants d'acide dicarboxylique dans le copolyester.

5. Méthode selon l'une quelconque des revendications précédentes, où la première surface du film protecteur est la surface thermosoudable.

6. Méthode selon l'une quelconque des revendications précédentes, où ledit film récepteur comprend une couche thermosoudable supplémentaire, la couche thermosoudable constituant ladite première surface du film récepteur.

7. Méthode selon la revendication 6, où ladite couche thermosoudable comprend un copolyester dérivé d'un diol aliphatique, d'un acide dicarboxylique aromatique et d'un acide dicarboxylique aliphatique, où la concentration en acide dicarboxylique aromatique se trouve dans la plage allant de 45 à 75% molaire sur la base des composants d'acide dicarboxylique du copolyester, et la concentration en acide dicarboxylique aliphatique se trouve dans la plage allant de 25 à 55% molaire sur la base des composants d'acide dicarboxylique du copolyester.

8. Méthode selon l'une quelconque des revendications précédentes, où ledit film récepteur en polyester orienté a été thermofixé sous contrainte dimensionnelle à une température supérieure à la température de transition vitreuse du polyester mais inférieure à la température de fusion de celui-ci.

9. Méthode selon l'une quelconque des revendications précédentes, où le film protecteur comprend du polyester.

10. Méthode selon l'une quelconque des revendications précédentes, où le film protecteur comprend du téréphtalate de polyéthylène.

11. Méthode selon l'une quelconque des revendications précédentes, où ledit film protecteur comprend une couche de substrat et une couche thermosoudable, la couche thermosoudable constituant ladite première surface du film protecteur.

12. Méthode selon la revendication 11, où ladite couche thermosoudable comprend un copolyester dérivé d'un diol aliphatique, d'un acide dicarboxylique aromatique et d'un acide dicarboxylique aliphatique, où la concentration en acide dicarboxylique aromatique se trouve dans la plage allant de 45 à 80% molaire sur la base des composants d'acide dicarboxylique du copolyester, et la concentration en acide dicarboxylique aliphatique se trouve dans la plage allant de 20 à 55% molaire sur la base des composants d'acide dicarboxylique du copolyester.

13. Méthode selon l'une quelconque des revendications précédentes, où lesdits films récepteur et protecteur comprennent une couche barrière, la couche barrière constituant les deuxièmes surfaces des films récepteur et protecteur, où le taux de transmission de vapeur d'eau se trouve dans la plage allant de 0,01 à 10 g/100 pouces²/jour (préférablement de 0,01 à 1,0 g/100 pouces²/jour, préférablement de 0,1 à 1 g/100 pouces²/jour), et/ou le taux de transmission d'oxygène se trouve dans la plage allant de 0,01 à 10 cm³/100 pouces²/jour/atm (préférablement de 0,01 à 1 cm³/100 pouces²/jour/atm, plus préférablement de 0,1 à 1 cm³/100 pouces²/jour/atm).

14. Méthode selon la revendication 13, où la couche barrière comprend du PVdC.

15. Méthode selon l'une quelconque des revendications précédentes, où le film protecteur et éventuellement le film récepteur présentent un voile <10%.

16. Méthode selon la revendication 2, où la viande ou le poisson emballé(e) est congelé(e) et est transféré(e) directement du congélateur au four.

17. Méthode selon l'une quelconque des revendications précédentes, où ledit four est un four à micro-ondes ou un four à convection.
